# FASCICULE DE BREVET EUROPEEN

(11) **EP 1 467 842 B1**
(45) Date de publication et mention de la délivrance du brevet: **13.02.2008**
(21) Numéro de dépôt: 02805369.2
(22) Date de dépôt: 11.12.2002
(51) Int. Cl.: B25C 1/08, F17C 13/04, F16L 29/02, F16K 1/30

(54) **CARTOUCHE DE GAZ COMPRIME POUR APPAREIL DE FIXATION A RECCORD INTEGRE D ETANCHEITE**
DRUCKGASPATRONE FÜR BEFESTIGUNGSVORRICHTUNG MIT INTEGRIERTEM DICHTUNGSANSCHLUSS
COMPRESSED GAS CARTRIDGE FOR FIXING APPARATUS WITH SEALING INTEGRATED CONNECTION

(30) Priorité: 18.12.2001 FR 0116369
(43) Date de publication de la demande: 20.10.2004
(73) Titulaire: SOCIETE DE PROSPECTION ET D'INVENTIONS TECHNIQUES SPIT, 26501 Bourg-Les-Valence (FR)
(72) Inventeur: VALLON, Emmanuel, F-26800 Portes les Valence (FR); TOULOUSE, Bruno, F-26000 Valence (FR); HERELIER, Patrick, F-07300 Tournon (FR)
(74) Mandataire: Bloch, Gérard
(86) Numéro de dépôt international: PCT/FR2002/004286
(87) Numéro de publication internationale: WO 2003/053637

(56) Documents cités:
- EP-A- 0 471 503
- EP-A- 0 922 902
- GB-A- 961 038
- US-A- 3 318 346
- US-A- 5 425 478

## Description

L'invention concerne les moyens de raccordement, d'une part, d'un embout d'éjection d'un clapet d'une cartouche de gaz comprimé destinée à alimenter en gaz comprimé un appareil de fixation à gaz comprimé et, d'autre part, d'un embout d'admission mâle d'un dispositif d'admission de gaz comprimé dans l'appareil, les moyens de raccordement comportant des moyens d'étanchéité destinés à assurer l'étanchéité entre les deux embouts.

Par appareil de fixation, il faut entendre un appareil d'entraînement d'éléments de fixation du type clou.

FR 2 771 796 enseigne de tels moyens de raccordement.

US 5425478, considéré comme reflétant l'art antérieur le plus proche, divulgue une cartouche telle que divulguée dans la revendication 1.

Plus précisément, avec ces moyens de raccordement, en fonctionnement, les extrémités de deux embouts mâles sont aboutées l'une contre l'autre dans un plan de joint, un manchon d'étanchéité s'étendant de part et d'autre de ce plan de joint et entourant les extrémités des deux embouts mâles, avec, dans le manchon, une gorge interne de rétention de gaz de fuite, s'étendant entre des portions de surface d'étanchéité cylindrique. Ces portions de surface d'étanchéité peuvent ne pas être suffisantes. Par ailleurs, l'aboutement, par les extrémités de leurs embouts, de la cartouche et de l'électrovanne d'admission, peut être à l'origine d'une certaine usure de l'électrovanne.

La présente invention vise à éliminer les inconvénients de l'art antérieur.

A cet effet, l'invention concerne un ensemble d'une cartouche de gaz comprimé et d'un embout mâle d'un dispositif d'admission de gaz d'un appareil de fixation à gaz comprimé, la cartouche comprenant un clapet avec un embout d'éjection femelle monté mobile en translation entre une position de repos et une position d'éjection de gaz et recevant l'embout mâle du dispositif d'admission de gaz de l'appareil pour pouvoir repousser le clapet en position d'éjection et pour constituer ainsi un raccord intégré d'étanchéité entre les deux embouts.

Grâce à l'invention, l'étanchéité peut donc être assurée non seulement par une portion de surface cylindrique, mais également, si en fonctionnement l'embout mâle vient en butée contre l'embout femelle du clapet d'éjection, par une portion de surface d'étanchéité annulaire s'étendant sensiblement perpendiculairement à l'axe de la portion de surface d'étanchéité cylindrique.

L'étanchéité, par un raccord ainsi intégré à la cartouche, peut être quasiment parfaite.

Avantageusement, mais avantageusement seulement, la paroi de réception intérieure de l'embout femelle de la cartouche présente une lèvre annulaire d'étanchéité.

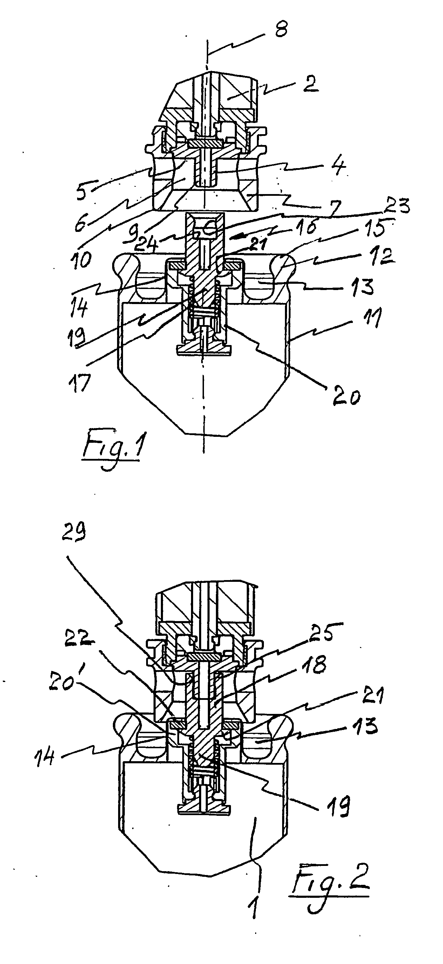

L'invention sera mieux comprise à l'aide de la description suivante de la cartouche, en référence au dessin annexé sur lequel
- la figure 1 est une vue en coupe éclatée d'une cartouche de gaz comprimé et d'une électrovanne d'admission de gaz d'un appareil de fixation à gaz comprimé;
- la figure 2 est une vue en coupe de la cartouche et de l'électrovanne avec leurs embouts introduits l'un dans l'autre;
- la figure 3 est une vue analogue à celle de la figure 2, mais à l'état de transfert de gaz de la cartouche dans l'appareil et
- la figure 4 est une vue d'ensemble de l'électrovanne montée sur la cartouche.

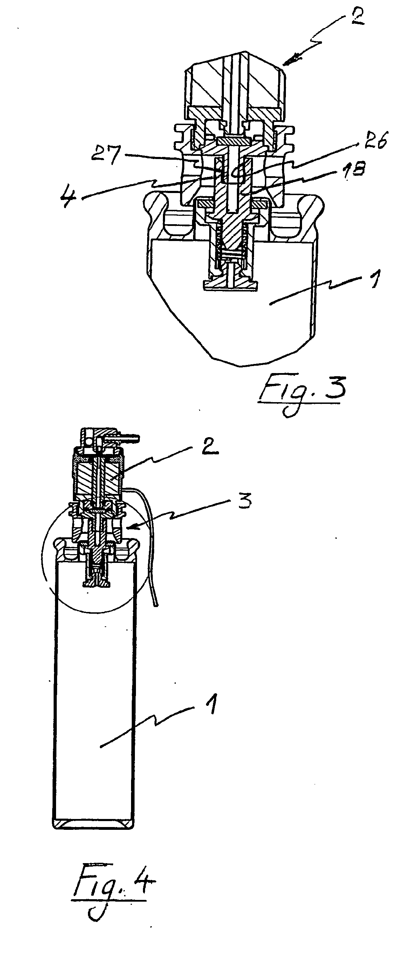

En référence à la figure 4, une cartouche de gaz comprimé 1 se monte sur l'électrovanne 2 d'admission de gaz comprimé d'un appareil d'entraînement d'éléments de fixation, du genre clou, par l'intermédiaire d'un emmanchement d'étanchéité 3.

L'électrovanne d'admission 2 comporte un embout d'admission mâle 4 s'étendant axialement - le long de l'axe 8 - en saillie hors du fond 5 d'une cuvette 6, formée par une jupe annulaire 7 de réception d'un pied d'éjection 14 de la cartouche 1. L'extrémité 9 de l'embout d'admission 4 de l'électrovanne est en retrait par rapport au bord annulaire 10 de la jupe 7. La cartouche de gaz comprimé 1 comporte une enveloppe cylindrique 11 se terminant par un épais bourrelet annulaire 12 formant cuvette 13 au centre de laquelle fait saillie le pied d'éjection 14, toutefois en retrait par rapport au bord annulaire 15 du bourrelet 12.

Un embout d'éjection 16 est monté dans le pied d'éjection 14, coulissant contre l'action d'un ressort de rappel 17. L'embout 16 comporte une partie tubulaire externe 18, en saillie hors du pied d'éjection 14 et de la cuvette 13, prolongée par une partie pleine interne 19 faisant office de clapet. Le clapet 19 est monté coulissant dans un cylindre 20. Le ressort dé rappel 17 est logé à l'intérieur du cylindre 20, autour de la partie de clapet 19 de l'embout d'éjection 16, en appui contre un rebord annulaire 21 du clapet 19, de diamètre sensiblement égal à celui d'une portion élargie 20' du cylindre 20 mais toutefois très légèrement inférieur, pour l'échappement du gaz comprimé entre le cylindre 20 et ce rebord 21. Au repos, le rebord 21 du clapet 19 est en appui contre un joint annulaire 22 logé dans un épaulement annulaire de la portion 20' du cylindre 20.

La partie tubulaire externe 18 de l'embout d'éjection 16 comporte un alésage 23 ici étagé, avec un épaulement annulaire interne 24, pour former un embout femelle de réception de l'embout mâle d'admission 4 de l'électrovanne 2. La longueur axiale de l'alésage de réception 23, entre l'épaulement interne 24 et l'extrémité 25 de l'embout 18 est sensiblement égale à la longueur axiale de l'embout mâle d'admission 4 de l'électrovanne 2. Le diamètre extérieur de l'embout mâle d'admission 4 est sensiblement égal, en fait très légèrement supérieur, au diamètre intérieur de la partie d'alésage 23 de plus grand diamètre.

La paroi 26 de l'alésage 23 de l'embout femelle d'éjection 18 et la paroi extérieure 27 de l'embout mâle d'admission 4, qui en fonctionnement sont en contact l'une avec l'autre, constituent des surfaces cylindriques d'étanchéité.

Plus précisément, et toujours en fonctionnement, l'extrémités 9 de l'embout 4 vient en butée contre l'épaulement annulaire transversal 24 disposé perpendiculairement à l'axe 8 des surfaces d'étanchéité cylindriques 26, 27 et qui constitue aussi une surface d'étanchéité. L'embout femelle 18 de la cartouche constitue donc un raccord intégré d'étanchéité entre les deux embouts, à l'intérieur de l'ensemble de la cartouche de gaz et de l'embout mâle d'admission 4.

Toujours en fonctionnement, grâce à des moyens conventionnels non représentés, et les embouts mâle d'admission 4 et d'éjection 18 étant emmanchés l'un dans l'autre, l'embout d'éjection femelle 16 est repoussé dans une position d'éjection de gaz, par l'embout d'admission mâle 4 contre l'action du ressort de rappel 17 pour dégager le rebord de clapet annulaire 21 du joint 22 et laisser le gaz comprimé s'échapper de la cartouche 1 dans l'électrovanne 2 de l'appareil de fixation.

Pour parfaire l'étanchéité entre les deux embouts d'admission 4 et d'éjection 16, la paroi 26 de l'alésage 23 de la portion d'embout femelle 18 peut présenter une lèvre annulaire d'étanchéité 29; le rétrécissement de l'alésage 23 au niveau de cette lèvre augmente le contact entre les deux embouts.

## Revendications

1. Ensemble d'une cartouche de gaz comprimé (1) et d'un embout mâle (4) d'un dispositif d'admission de gaz d'un apppareil de fixation à gaz comprimé (2), la cartouche (1) comprenant un clapet (16, 21) avec un embout d'éjection femelle (18) monté mobile en translation entre une position de repos et une position d'éjection de gaz et recevant l'embout mâle (4) du dispositif d'admission de gaz (2) de l'appareil pour pouvoir repousser le clapet (16) en position d'éjection et pour constituer ainsi un raccord intégré d'étanchéité (24, 26, 27) entre les deux embouts.

2. - Ensemble selon la revendication 1, dans laquelle la paroi de réception intérieure (26) de l'embout femelle (18) de la cartouche présente une lèvre annulaire d'étanchéité (29).

## Claims

1. Assembly consisting of a compressed-gas cartridge (1) and of a male end-piece (4) of a gas intake device (2) of a compressed-gas fastening appliance, the cartridge (1) comprising a valve (16, 21) with a female discharge end-piece (18) mounted so that it can move translationally between a rest position and a gas discharge position and receiving the male end-piece (4) of the gas intake device (2) of the appliance so as to be able to push back the valve (16) into the discharge position and to thus constitute an integrated sealing coupling (24, 26, 27) between the two end-pieces.

2. Assembly according to Claim 1, in which the inner reception wall (26) of the female end-piece (18) of the cartridge has an annular sealing lip (29).

## Patentansprüche

1. Einheit aus einer Druckgaspatrone (1) und einem Einsteckendstück (4) einer Gaszufuhrvorrichtung eines Druckgas-Befestigungsgeräts (2), wobei die Patrone (1) eine Ventilklappe (16, 21) mit einem Ausstoß-Aufnahmeendstück (18) aufweist, das translationsbeweglich zwischen einer Ruhestellung und einer Gasausstoßstellung montiert ist und das Einsteckendstück (4) der Gaszufuhrvorrichtung (2) der Geräts aufnimmt, um die Ventilklappe (16) in die Ausstoßstellung zurückdrücken zu können und um so eine integrierte Dichtverbindung (24, 26, 27) zwischen den zwei Endstücken zu bilden.

2. Einheit nach Anspruch 1, bei der die innere Aufnahmewand (26) des Aufnahmeendstücks (18) der Patrone eine ringförmige Dichtlippe (29) aufweist.
